# EUROPEAN PATENT APPLICATION

(11) **EP 4 827 121 A1**
(43) Date of publication of application: **21.10.2026**
(21) Application number: 23961159.3
(22) Date of filing: 14.12.2023
(51) Int. Cl.: H04W 4/02

(54) **INFORMATION PROCESSING METHOD, TERMINAL, FIRST NETWORK ELEMENT, COMMUNICATION SYSTEM, AND STORAGE MEDIUM**

(71) Applicant: Beijing Xiaomi Mobile Software Co., Ltd., Beijing 100085 (CN)
(72) Inventor: GONG, Yubing, Beijing 100085 (CN); MAO, Yuxin, Beijing 100085 (CN)
(74) Representative: Stöckeler, Ferdinand
(86) International application number: PCT/CN2023/138893
(87) International publication number: WO 2025/123299

(57) **Abstract**

Provided in the embodiments of the present disclosure are an information processing method, a terminal, a first network element, a communication device, and a storage medium. The information processing method comprises: executing a first operation related to a first identifier, wherein the first identifier is used for identifying an LCS session. In this way, in the embodiments of the present disclosure, a new identifier is introduced for identifying an LCS session between a terminal and a first network element.

## Description

### TECHNICAL FIELD

The present disclosure relates to the field of communication technology, and specifically to a method for processing information, a terminal, a first element, a communication system, and a storage medium.

### BACKGROUND

In wireless communication technologies, a user plane connection may be established between a terminal and a network element such as a location management function (LMF). The user plane connection may not need to be relayed via an access and mobility management function (AMF), thus not occupying AMF resources and improving transmission efficiency; and the user plane connection may also enable the communication system to have a more efficient communication load and enable a single connection to handle a plurality of location services (LCS) sessions, etc.

### SUMMARY

Embodiments of the present disclosure need to identify which location services (LCS) session a user plane transport message belongs to.

According to a first aspect of the embodiments of the present disclosure, a method for processing information is provided, performed by a terminal, including: performing a first operation related to a first identifier, in which the first identifier is configured to identify an LCS session.

According to a second aspect of the embodiments of the present disclosure, a method for processing information is provided, performed by a first network element, including: performing a first operation related to a first identifier, in which the first identifier is configured to identify an LCS session.

According to a third aspect of the embodiments of the present disclosure, a terminal is provided, including: a first processing module, configured to perform a first operation related to a first identifier, in which the first identifier is configured to identify an LCS session.

According to a fourth aspect of the embodiments of the present disclosure, a first network element is provided, including: a second processing module, configured to perform a first operation related to a first identifier, in which the first identifier is configured to identify an LCS session.

According to a fifth aspect of the embodiments of the present disclosure, a terminal is provided, including: one or more processors, in which the terminal is configured to perform optional implementations of the first aspect.

According to a sixth aspect of the embodiments of the present disclosure, a first network element is provided, including: one or more processors, in which the first network element is configured to perform optional implementations of the second aspect.

According to a seventh aspect of the embodiments of the present disclosure, a communication system is provided, including: a terminal and a first network element, in which the terminal is configured to perform the method as described in optional implementations of the first aspect, and the first network element is configured to perform the method as described in optional implementations of the second aspect.

According to an eighth aspect of the embodiments of the present disclosure, a storage medium for storing instructions is provided. When the instructions are executed on a communication device, the communication device is caused to perform the method as described in optional implementations of the first aspect, the second aspect, or the first aspect and the second aspect.

The embodiments of the present disclosure may identify which LCS session the user plane transport message belongs to.

### BRIEF DESCRIPTION OF THE DRAWINGS

In order to more clearly illustrate the technical solution in the embodiments of the disclosure, the accompanying drawings to be used in the embodiments of the disclosure will be described below. The following drawings are only example embodiments of the present disclosure, and do not constitute a limitation on the protection scope of the present disclosure.
FIG. 1 is a block diagram illustrating a system for processing information according to some embodiments of the present disclosure.
FIG. 2A is an interaction diagram illustrating a method for processing information according to some embodiments of the present disclosure.
FIG. 2B is an interaction diagram illustrating a method for processing information according to some embodiments of the present disclosure.
FIG. 2C is an interaction diagram illustrating a method for processing information according to some embodiments of the present disclosure.
FIG. 2D is an interaction diagram illustrating a method for processing information according to some embodiments of the present disclosure.
FIG. 2E is an interaction diagram illustrating a method for processing information according to some embodiments of the present disclosure.
FIG. 3A is a flowchart illustrating a method for processing information according to some embodiments of the present disclosure.
FIG. 3B is a flowchart illustrating a method for processing information according to some embodiments of the present disclosure.
FIG. 3C is a flowchart illustrating a method for processing information according to some embodiments of the present disclosure.
FIG. 3D is a flowchart illustrating a method for processing information according to some embodiments of the present disclosure.
FIG. 3E is a flowchart illustrating a method for processing information according to some embodiments of the present disclosure.
FIG. 4A is a flowchart illustrating a method for processing information according to some embodiments of the present disclosure.
FIG. 4B is a flowchart illustrating a method for processing information according to some embodiments of the present disclosure.
FIG. 4C is a flowchart illustrating a method for processing information according to some embodiments of the present disclosure.
FIG. 4D is a flowchart illustrating a method for processing information according to some embodiments of the present disclosure.
FIG. 4E is a flowchart illustrating a method for processing information according to some embodiments of the present disclosure.
FIG. 5A is a schematic diagram illustrating a method for processing information applied to uplink (UL) location services user plane (LCS-UP) transport according to some embodiments of the present disclosure.
FIG. 5B is a schematic diagram illustrating a method for processing information applied to a downlink (DL) LCS-UP transport according to some embodiments of the present disclosure.
FIG. 6A is a block diagram illustrating a terminal according to some embodiments of the present disclosure.
FIG. 6B is a block diagram illustrating a first network element according to some embodiments of the present disclosure.
FIG. 7A is a block diagram illustrating a communication device according to some embodiments of the present disclosure.
FIG. 7B is a block diagram illustrating a chip according to some embodiments of the present disclosure.

### DETAILED DESCRIPTION

Embodiments of the present disclosure provide a method for processing information, a terminal, a terminal, a first network element, a communication system, and a storage medium.

According to a first aspect, the embodiments of the present disclosure provide a method for processing information, performed by a terminal, including: performing a first operation related to a first identifier, in which the first identifier is configured to identify a location services (LCS) session.

In the embodiments, a new identifier (i.e., the first identifier) may be introduced to identify a LCS session between the terminal and the first network element.

In some embodiments in combination with the first aspect, in some embodiments, performing the first operation related to the first identifier includes one of: receiving a first message sent by a first network element, in which the first message includes the first identifier; or sending a second message to a first network element, in which the second message includes the first identifier.

In the embodiments, the terminal may receive the first message including the first identifier sent by the first network element, i.e., the first network element may allocate the first identifier for identifying the LCS session; or the terminal may send the second message including the first identifier to the first network element, i.e., the terminal may allocate the first identifier for identifying the LCS session. The first identifier is configured to identify the LCS session in a user plane connection between the terminal and the first network element.

In some embodiments in combination with the first aspect, in some embodiments, the method further includes: determining the first identifier of the LCS session based on the first message; or determining the first identifier of the LCS session based on a historical first message; or allocating the first identifier for the LCS session.

In the embodiments, the terminal may also determine the first identifier for identifying the LCS session based on a previously received first message sent by the first network element or a currently received first message sent by the first network element, so that the terminal may set the first identifier of the LCS session based on the first message.

In some embodiments in combination with the first aspect, in some embodiments, the first message is configured to transmit a long term evolution (LTE) positioning protocol (LPP) message and/or an LCS message; and/or the second message is configured to transmit an LPP message and/or an LCS message.

In the embodiments, the first message may carry the first identifier and may also be used to transmit the LPP message or the LCS message, thus saving signaling overhead.

In some embodiments in combination with the first aspect, in some embodiments, the method further includes: sending a third message to the first network element, in which the third message includes the first identifier.

In the embodiments, the terminal may further send the third message including the first identifier to the first network element, so that an allocated first identifier may be used in the LCS session, so that the first network element knows which LCS session corresponds to a current third message.

In some embodiments in combination with the first aspect, in some embodiments, the third message further includes at least one of: a message type for indicating a type of location services user plane (LCS-UP) transport; a payload for indicating a payload of LCS-UP transport; or a payload type for indicating a payload type of LCS-UP transport.

In the embodiments, the terminal may further carry the message type, the payload and/or the payload type in the third message, so that the first network element may identify the third message.

In some embodiments in combination with the first aspect, in some embodiments, the method further includes: receiving a fourth message sent by the first network element, in which the fourth message includes the first identifier.

In the embodiments, the terminal may also receive the fourth message including the first identifier sent by the first network element, so that during the LCS session transport, it may know which LCS session the fourth message corresponds to.

In some embodiments in combination with the first aspect, in some embodiments, the fourth message further includes at least one of: a message type for indicating a type of LCS-UP transport; a payload for indicating a payload of LCS-UP transport; or a payload type for indicating a payload type of LCS-UP transport.

In the embodiments, by carrying the message type, the payload and/or the payload type in the fourth message, it is convenient for the terminal to identify the fourth message.

In some embodiments in combination with the first aspect, in some embodiments, the method further includes: associating the fourth message with information related to the LCS session indicated by the first identifier; or performing, based on the fourth message, a second operation related to the LCS session.

In the above embodiments, the terminal may associate the fourth message with the information related to the LCS session indicated by the first identifier. Since the fourth message includes information related to a current LCS session, the first identifier may indicate information related to the same LCS session stored previously, thus enabling an association of the information related to the LCS sessions that share the same identifier; and/or the terminal may also perform, based on the fourth message, i.e., based on the first identifier, the second operation on the LCS session corresponding to the first identifier.

In some embodiments in combination with the first aspect, in some embodiments, the first network element is: a LMF, and/or a sensing function (SF).

According to a second aspect, the embodiments of the present disclosure provide a method for processing information, performed by a first network element, including: performing a first operation related to a first identifier, in which the first identifier is configured to identify a location services (LCS) session.

In some embodiments in combination with the second aspect, in some embodiments, performing the first operation related to the first identifier includes one of: sending a first message to a terminal, in which the first message includes the first identifier; or receiving a second message sent by a terminal, in which the second message includes the first identifier.

In some embodiments in combination with the second aspect, in some embodiments, the method further includes: determining the first identifier of the LCS session based on the second message; or determining the first identifier of the LCS session based on a historical second message; or allocating the first identifier for the LCS session.

In some embodiments in combination with the second aspect, in some embodiments, the first message is configured to transmit an LPP message and/or an LCS message; and/or the second message is configured to transmit an LPP message and/or an LCS message.

In some embodiments in combination with the second aspect, in some embodiments, the method further includes: receiving a third message sent by the terminal, in which the third message includes the first identifier.

In some embodiments in combination with the second aspect, in some embodiments, the third message further includes at least one of: a message type for indicating a type of LCS-UP transport; a payload for indicating a payload of LCS-UP transport; or a payload type for indicating a payload type of LCS-UP transport.

In some embodiments in combination with the second aspect, in some embodiments, the method further includes: associating the third message with information related to the LCS session indicated by the first identifier; or performing, based on the third message, a third operation related to the LCS session.

In some embodiments in combination with the second aspect, in some embodiments, the method further includes: sending a fourth message to the terminal, in which the fourth message includes the first identifier.

In some embodiments in combination with the second aspect, in some embodiments, the fourth message further includes at least one of: a message type for indicating a type of LCS-UP transport; a payload for indicating a payload of LCS-UP transport; or a payload type for indicating a payload type of LCS-UP transport.

In some embodiments in combination with the second aspect, in some embodiments, the first network element is: a LMF, and/or a SF.

According to a third aspect, the embodiments of the present disclosure provide a terminal, including: a first processing module, configured to perform a first operation related to a first identifier, in which the first identifier is configured to identify a LCS session.

According to a fourth aspect, the embodiments of the present disclosure provide a first network element, including: a second processing module, configured to perform a first operation related to a first identifier, in which the first identifier is configured to identify a LCS session.

According to a fifth aspect, the embodiments of the present disclosure provide a terminal, including: one or more processors, in which the terminal is configured to perform optional implementations of the first aspect.

According to a sixth aspect, the embodiments of the present disclosure provide a first network element, including: one or more processors, in which the first network element is configured to perform optional implementations of the second aspect.

According to a seventh aspect, the embodiments of the present disclosure provide a communication system, including: a terminal and a first network element, in which the terminal is configured to perform the method as described in optional implementations of the first aspect, and the first network element is configured to perform the method as described in optional implementations of the second aspect.

According to an eighth aspect, the embodiments of the present disclosure provide a storage medium for storing instructions that, when executed on a communication device, cause the communication device to perform the method as described in optional implementations of the first aspect, the second aspect, or the first aspect and the second aspect.

According to a ninth aspect, the embodiments of the present disclosure provide a program product that, when executed by a communication device, causes the communication device to perform the method as described in optional implementations of the first aspect, the second aspect, or the first aspect and the second aspect.

According to a tenth aspect, the embodiments of the present disclosure provide a computer program that, when executed on a computer, causes the computer to perform the method for processing information as described in optional implementations of the first aspect, the second aspect, or the first aspect and the second aspect.

According to an eleventh aspect, the embodiments of the present disclosure provide a chip or a chip system, including a processing circuit, configured to perform the method as described in optional implementations of the first aspect, the second aspect, and the third aspect.

It may be understood that the terminal, the first network element, the communication system, the storage medium, the program product, the computer program, the chip or the chip system are all used to perform the methods provided by the embodiments of the present disclosure. Therefore, for beneficial effects that may be achieved reference may be made to the beneficial effects in corresponding methods, and will not be repeated here.

The embodiments of the present disclosure provide a method for processing information, a terminal, a first network element, a communication system, and a storage medium. In some embodiments, terms such as method for processing information and communication method may be replaced with each other, terms such as apparatus for processing information and communication apparatus may be replaced with each other, and terms such as system for processing information and communication system may be replaced with each other.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel, and the uplink, the downlink, etc. may be replaced with a sidelink.

In some embodiments, the terminal may be replaced with the access network device, the core network device, or the network device. In this case, the access network device, the core network device, or the network device may be set to have all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

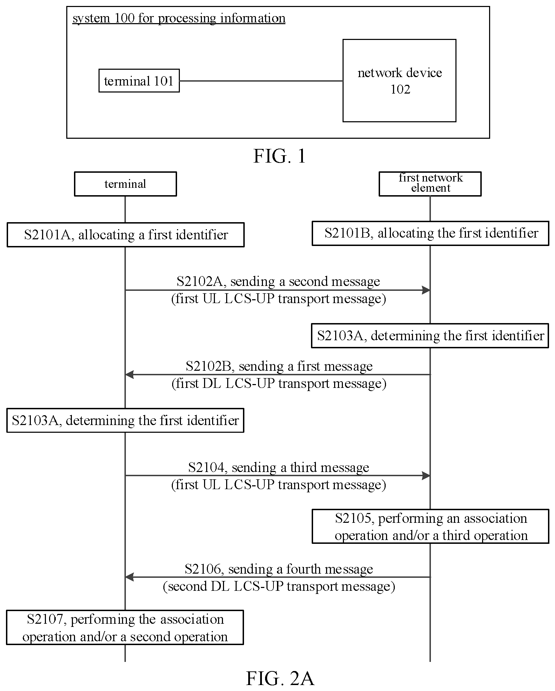

FIG. 1 is a block diagram illustrating a system 100 for processing information according to some embodiments of the present disclosure. As shown in FIG. 1, the system 100 for processing information may include: a terminal 101 and a network device 102.

In some embodiments, the network device 102 may include at least one of an access network device or a core network device.

In some embodiments, the terminal 101 includes, for example, at least one of a mobile phone, a wearable device, an Internet of Things (IoT) device or terminal, a car with a communication function, a smart car, a Pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, which is not limited herein.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including the network element and the second network element, or may be a plurality of devices or device groups, each of which includes all or part of the network element and the second network element. The network elements may be virtual or physical. The core network includes, for example, at least one of an evolved packet core (EPC), a 5G core network (5GCN), or a next generation core (NGC).

In some embodiments, the first network element is, for example, an LMF or an SF, which is not limited herein.

It may be understood that the system for processing information described in the embodiments of the present disclosure is intended to illustrate the technical solution in the embodiments of the present disclosure more clearly, and does not constitute a limitation of the technical solution in the embodiments of the present disclosure. Those skilled in the art may know that the technical solution in the embodiments of the present disclosure is equally applicable to similar technical problems, with the evolution of a system architecture and the emergence of a new service scene.

The following embodiments of the present disclosure may be applied to the system 100 for processing information, or to some entities shown in FIG. 1, which are not limited herein. Entities in FIG. 1 are illustrative. The communication system may include all or some of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), 6th generation mobile communication system (6G), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In some embodiments, the LMF and/or the UE may trigger establishment of the user plane connection. The UE and/or the LMF may maintain an established user plane connection. The LMF may modify or terminate the established user plane connection between the UE and the LMF. In some embodiments, the user plane connection may be a connection between the UE and the LMF. In some embodiments, the UE may be a terminal.

In some embodiments, the LMF may send user plane information to the UE via a downlink non access stratum (DL NAS) transmission message of an access and mobility management function (AMF). For example, the user plane information includes an Internet protocol (IP) address and/or a fully qualified domain name (FQDN). If the LMF sends its FQDN to the UE, a domain names system (DNS) server/resolver is used to resolve the IP address of the LMF, for example, an edge application server discovery function (EASDF) or a local DNS for local LMF address resolution. The UE uses a user equipment routing selection policy (URSP) which includes user plane positioning related packet data unit (PDU) session parameters to establish a PDU session for user plane positioning. For example, the PDU session parameters include a dedicated data network name (DNN) and/or single network slice selection assistance information (S-NSSAI). A session management function (SMF) selects a PDU session anchor (PSA) user plane function (UPF) (located in a central site or a local site) connecting with the LMF for the PDU session, based on the S-NSSAI, the DNN and UE location information, etc.

In some embodiments, by preconfiguring the SMF with local LMF(s) IP address(es) and/or network prefix(es) and their data network access identifiers (DNAIs), session break out for local LMF service for the user plane positioning can be supported, for positioning dedicated PDU session in certain service area(s) for a local PSA and uplink classifier (UL CL)/branch point (BP) insertion.

In some embodiments, positioning a signaling using the user plane has several benefits, such as: it has a more efficient communication overload with a direct connection from the LCS server to the UE; it may not require base station, AMF, LMF signaling processing of radio resource control (RRC)), a next generation access protocol (NG-AP) and hypertext transfer protocol 2.0 (HTTP/2) protocol stacks; a single connection may handle a plurality of LCS sessions; and it may have a plurality of choices depending on UE support (For example, both 3GPP LPP and OMA LPPe may be possible in selection of positioning protocols).

In some embodiments, a correlation identifier (ID) and a routing ID are different terms for the same identifier. The term "correlation ID" is used for an identifier in a service operation between the AMF and the LMF, while the term "routing ID" is used for an identifier in an NAS message sent by an N1 reference point between the UE and the AMF or between a positioning reference unit (PRU) and the AMF.

In some embodiments, the correlation ID may be allocated by the AMF or the LMF.

To enable the AMF to distinguish a correlation ID assigned by the LMF from a correlation ID assigned by the AMF, the two types of correlation IDs may be selected from different ranges with or without a flag.

In some embodiments, the correlation ID is correlated to the LCS session. A deferred routing identifier may assist the serving LMF in identifying a periodic or triggered location session if the same serving LMF had assigned the deferred routing identifier or may indicate to the LMF that it is acting as a default LMF.

In some embodiments, two possible ways of transmitting a message between the LMF and the UE may include transmission via the control plane. In some embodiments, the UE and the LMF may send the message via the control plane: UE - AMF - LMF. In some embodiments, the UE and the LMF may send the message via the user plane: UE - LMF.

In some embodiments, the message may be transmitted via the user plane, including a location supplementary service message and/or an LPP message.

In some embodiments, the routing ID is between the UE and the AMF, and the correlation ID is between the AMF and the LMF. The correlation ID may be the same or different. The correlation ID is correlated to a specific LCS session. The correlation ID or routing ID may be used to identify the LMF and the LCS session of the LMF.

In some embodiments, the user plane may support a secure user plane location (SUPL) protocol and/or a location services user plane protocol (LCS-UPP); and the LCS-UPP includes a UL LCS-UP transport message and a DL LCS-UP transport message.

For example, content of the UL LCS-UP transport message is shown in Table 1. The content of the UL LCS-UP transport message may include an information element identity (IEI), an information element (IE), a type/reference, presence, a format, and/or a length. The length is in bytes; and the payload may be a payload. The UL LCS-UP transport message is sent by the UE to the LMF to transmit the LPP message or the location supplementary service message. In some embodiments, the location supplementary service message may be an LCS message. The message type is UL LCS-UP transport, with significance: dual (i.e., related to originate or terminate an access and a network); and a direction: UE to network.

**Table 1**

| **IEI** | **IE** | **Type/Reference** | **Presence** | **Format** | **Length** |
|---|---|---|---|---|---|
| | UL LCS-UP TRANSPORT identity | Message type | M | V | 1 |
| | LCS-UP payload type | LCS-UP payload | M | V | 1 |
| | LCS-UP payload | LCS-UP payload | M | LV-E | 3-65537 |

For example, content of the DL LCS-UP transport message is shown in Table 2. The content of the DL LCS-UP transport message may include an IEI, an IE, a type/reference, presence, a format, and/or a length. The length is in bytes; and the payload may be a payload. The DL LCS-UP transport message is sent by the LMF to the UE to transmit the LPP message or the location supplementary service message. In some embodiments, the location supplementary service message may be an LCS message. The message type is DL LCS-UP transport, with significance: dual (i.e., related to originate or terminate an access and a network); and a direction: network to UE.

**Table 2**

| **IEI** | **IE** | **Type/Reference** | **Presence** | **Format** | **Length** |
|---|---|---|---|---|---|
| | DL LCS-UP TRANSPORT identity | Message type | M | V | 1 |
| | LCS-UP payload type | LCS-UP payload | M | V | 1 |
| | LCS-UP payload | LCS-UP payload | M | LV-E | 3-65537 |

In some embodiments, the location supplementary service message and the LPP message may be transmitted via the user plane or the control plane.

In some embodiments, in the case of the control plane, the location supplementary service message and the LPP message are transmitted together with the routing ID (or correlation ID). The routing ID (or correlation ID) not only associates with a specific LMF but also correlates with a specific LCS session. For example, if a UE has a plurality of LCS sessions with the same LMF, the LMF may use different correlation IDs to differentiate two LCS sessions belonging to the same UE.

In some embodiments, in the case of the user plane, if a user plane connection may be used for a plurality of LCS sessions, there is no parameter in a current UL/DL LCS-UP transport message that acts as a correlation ID (or routing ID) that may help the LMF to identify the LCS session.

FIG. 2A is an interaction diagram illustrating a method for processing information according to some embodiments of the present disclosure. As shown in FIG. 2A, some embodiments of the present disclosure relate to a method for processing information, applied to a system 100 for processing information. The above method includes the following steps at S2101A to S2107.

At S2101A, a terminal allocates a first identifier.

In some embodiments, the terminal allocates the first identifier for an LCS session. In some embodiments, the terminal allocates the first identifier for at least one LCS session.

For example, if there are a plurality of LCS sessions between the terminal and a first network element, the terminal allocates different first identifiers for the plurality of LCS sessions.

For example, if there is one LCS session between the terminal and the first network element, the terminal may not allocate the first identifier for the one LCS session.

For example, when the terminal is connected to different first network elements, the terminal may allocate different first identifiers for LCS sessions with different first network elements.

In some embodiments, the first identifier may be one or more bits. For example, the first identifier is a first value, used to identify a first LCS session; or the first identifier is a second value, used to identify a second LCS session.

In some embodiments, the first identifier may be any string, index, or number, etc.

In some embodiments, the first identifier may be an LCS session identity.

In some embodiments, the first identifier is configured to identify a positioning LCS session. For example, the first identifier is configured to identify an LCS session in a user plane connection. For example, the user plane connection may be a connection between the terminal and the first network element.

In some embodiments, the name of the first identifier is not limited, for example, it may be a correlation identifier, etc.

At S2101B, a first network element allocates the first identifier.

In some embodiments, the first network element allocates the first identifier for an LCS session. In some embodiments, the first network element allocates the first identifier for at least one LCS session.

For example, if there are a plurality of LCS sessions between the terminal and the first network element, the first network element allocates different first identifiers for the plurality of LCS sessions.

For example, if there is one LCS session between the terminal and the first network element, the first network element may not allocate the first identifier for the one LCS session.

For example, when the terminal is connected to different first network elements, the first network element may allocate different first identifiers for LCS sessions between the terminal and different first network elements.

In some embodiments, S2101 includes S2101A or S2101B.

In some embodiments, the terminal performs a first operation related to the first identifier. In some embodiments, in a case that a user plane connection is used for the at least one LCS session, the terminal performs the first operation related to the first identifier.

In some embodiments, the first operation includes sending the first identifier, or receiving the first identifier.

In some embodiments, performing, by the terminal, the first operation related to the first identifier includes: sending, by the terminal, the first identifier to the first network element, or receiving, by the terminal, the first identifier sent by the first network element. For example, after allocating the first identifier for the LCS session, the terminal sends the first identifier to the first network element. For example, the terminal receives the first identifier sent by the first network element and determines the first identifier of the LCS session.

In some embodiments, performing, by the terminal, the first operation related to the first identifier may be S2102. S2102 may include S2102A or S2102B.

In some embodiments, the first network element performs the first operation related to the first identifier. In some embodiments, in a case that a user plane connection is used for the at least one LCS session, the terminal performs the first operation related to the first identifier.

In some embodiments, performing, by the first network element, the first operation related to the first identifier includes: sending, by the first network element, the first identifier to the terminal, or receiving, by the first network element, the first identifier sent by the terminal. For example, after allocating the first identifier for the LCS session, the first network element sends the first identifier to the terminal. For example, the first network element receives the first identifier sent by the terminal and determines the first identifier of the LCS session.

In some embodiments, performing, by the first network element, the first operation related to the first identifier may be S2102. S2102 may include S2102A or S2102B.

At S2102A, the terminal sends a second message to the first network element.

In some embodiments, after allocating the first identifier for the LCS session, the terminal sends the second message to the first network element.

In some embodiments, the first network element receives the second message sent by the terminal.

In some embodiments, the first network element includes an LMF and/or an SF.

In some embodiments, the second message may be a UL LCS-UP transport message or a user plane message. For example, the second message is a first UL LCS-UP transport message. In some embodiments, the second message is configured to transmit the first identifier.

In some embodiments, the second message may be configured to transmit an LPP message and/or an LCS message. In some embodiments, the LCS message may be a location supplementary services message.

In some embodiments, the second message includes the first identifier. In some embodiments, the first identifier may be one or more bits in the second message. In some embodiments, the first identifier may be an information element in the second message, and the information element may be one or more bits. The information element configured to identify the first identifier may be a predetermined information element, a reserved element, or any information element in the second message, etc.

In some embodiments, the second message may further include at least one of: a message type, a payload, or a payload type. The message type, the payload, and the payload type each may be an information element in the second message, or one or more bits in the second message.

In some embodiments, the message type indicates a type of the second message. For example, the message type indicates a message type of LCS-UP transport. For example, the message type may be a DL LCS-UP transport type or a UL LCS-UP transport type. The type of the second message may be the UL LCS-UP transport type.

In some embodiments, the payload may be a load.

In some embodiments, the payload indicates a container for transmitting the second message. For example, the payload indicates a payload or load of the LCS-UP transport.

In some embodiments, the payload type indicates a type of the container for transmitting the second message. For example, the payload type indicates a type of the payload of the UL LCS-UP transport; and the payload type may be an LPP message type or an LCS message type.

At S2102B, the first network element sends a first message to the terminal.

In some embodiments, after allocating the first identifier for the LCS session, the first network element sends the first message to the terminal.

In some embodiments, the terminal receives the first message sent by the first network element.

In some embodiments, the first message may be a DL LCS-UP transport message or a user plane message. For example, the first message is a first DL LCS-UP transport message. In some embodiments, the second message is configured to transmit the first identifier.

In some embodiments, the first message may be configured to transmit an LPP message and/or an LCS message.

In some embodiments, the first message includes the first identifier. In some embodiments, the first identifier may be one or more bits in the first message. In some embodiments, the first identifier may be an information element in the first message, and the information element may be one or more bits. The information element configured to identify the first identifier may be a predetermined information element, a reserved element, or any information element in the first message, etc.

In some embodiments, the first message may further include at least one of: a message type, a payload, or a payload type. The message type, the payload, and the payload type may be an information element in the second message, or one or more bits in the second message.

In some embodiments, the message type indicates a type of the first message. For example, the message type indicates a message type of LCS-UP transport. For example, the type of the second message may be the DL LCS-UP transport type.

In some embodiments, the payload indicates a container for transmitting the first message. For example, the payload indicates a payload or load of the LCS-UP transport.

In some embodiments, the payload type indicates a type of the container for transmitting the first message. For example, the payload type indicates a type of the payload of the DL LCS-UP transport; and the payload type may be an LPP message type or an LCS message type.

At S2103A, the first network element determines the first identifier.

In some embodiments, the first network element determines the first identifier of the first LCS session based on a received second message.

In some embodiments, the second message may be a currently received second message, or the second message may be a historical second message or a previous second message.

For example, the first network element receives the second message sent by the terminal, and determines the first identifier of the LCS session if it is determined that the second message includes the first identifier of the LCS session.

For example, the first network element receives the second message sent by the terminal, and obtains the first identifier of the LCS session from the previous second message if it is determined that the second message does not include the first identifier of the LCS session.

For example, if the first network element determines that the LCS session is resumed, the first identifier of the LCS session is obtained based on the historical second message.

At S2103B, the terminal determines the first identifier.

In some embodiments, the terminal determines the first identifier of the first LCS session based on a received first message.

In some embodiments, the first message may be a currently received first message, or the first message may be a historical first message or a previous first message.

For example, the terminal receives the first message sent by the first network element, and determines the first identifier of the LCS session if it is determined that the first message includes the first identifier of the LCS session.

For example, the terminal receives the first message sent by the first network element, and obtains the first identifier of the LCS session from a previous first message if it is determined that the first message does not include the first identifier of the LCS session.

For example, if the terminal determines that the LCS session is resumed, the first identifier of the LCS session is obtained based on the historical first message.

In some embodiments, S2103 includes S2103A or S2103B.

At S2104, the terminal sends a third message to the first network element.

In some embodiments, after determining the first identifier of the LCS session, the terminal sends the third message to the first network element. In some embodiments, the third message may be a message for the UL LCS-UP transport using the first identifier.

In some embodiments, the first network element receives the third message sent by the terminal. In some embodiments, the first identifier may be one or more bits in the third message. In some embodiments, the first identifier may be an information element in the third message, and the information element may be one or more bits. The information element configured to identify the first identifier may be a predetermined information element, a reserved element, or any information element in the third message, etc.

In some embodiments, the third message may be a UL LCS-UP transport message, for example, a second UL LCS-UP transport message. Optionally, the third message is configured to transmit the first identifier.

In some embodiments, the third message may be configured to transmit an LPP message and/or an LCS message.

In some embodiments, the third message includes the first identifier.

In some embodiments, the third message may further include at least one of: a message type, a payload, or a payload type. The message type, the payload, and the payload type may be an information element in the third message, or one or more bits in the third message.

In some embodiments, the message type indicates a type of the third message. For example, the message type indicates a message type of LCS-UP transport. For example, the type of the third message may be the UL LCS-UP transport type.

In some embodiments, the payload indicates a container for transmitting the third message. For example, the payload indicates a payload or load of the LCS-UP transport.

In some embodiments, the payload type indicates a type of the container for transmitting the third message. For example, the payload type indicates a type of the payload of the UL LCS-UP transport; and the payload type may be an LPP message type or an LCS message type.

In some embodiments, the first network element determines the first identifier of the LCS session based on the third message.

At S2105, the first network element performs an association operation and/or a third operation.

In some embodiments, the first network element associates the third message with information related to the LCS session indicated by the first identifier.

In some embodiments, the first network element associates a received third message with information related to a historical LCS session. For example, the third message includes information related to a current LCS session, and the third message also includes the first identifier; the first network element stores the information related to the historical LCS session; and the first network element may associate the information related to the LCS sessions that share the same first identifier, i.e., the first network element associates the information related to the LCS session in the third message with the information related to the historical LCS session, and the information related to the historical LCS session may be indicated by the first identifier.

In some embodiments, the third message may include a message identifier indicating the third message.

In some embodiments, the information related to the LCS session includes at least one of: positioning measurement information, a positioning result, assistance information, a quality of service (QoS) parameter, or a related policy. For example, the positioning measurement information may be any data used for measurement, for example, the positioning measurement information may include a measurement signal and/or a measurement period, etc. For example, the positioning result may be a result of positioning, for example, the positioning result may include location information, angle information, distance information, and/or speed information of the terminal, etc. For example, the assistance information may be information assisting positioning measurement. For example, the QoS parameter may be a QoS requirement for positioning, etc. The related policy may include an LCS policy, LCS service subscription data, and/or a measurement period, etc.

For example, a LCS session corresponds to a first identifier; the first network element receives the third message, and the third message includes the first identifier of the LCS session and first location information of the terminal; the first network element stores second location information of the terminal obtained previously for the LCS session; and the first network element may associate the first location information and the second location information of the terminal via the first identifier.

In some embodiments, the first network element performs a third operation related to the LCS session based on the third message.

In some embodiments, the third operation includes at least one of: determining the positioning result, storing the positioning result and/or the information related to the LCS session, or forwarding the positioning result and/or the information related to the LCS session.

For example, after receiving the information related to the LCS session, the first network element may calculate the location information, the angle information, and/or the distance information of the terminal based on the information related to the LCS session.

For example, the first network element stores the positioning result determined by the first network element locally; or the first network element receives the positioning result determined by the terminal and stores it locally.

For example, the first network element sends the positioning result to other network elements, for example, to a gateway mobile location centre (GMLC) or an AMF, etc.

At S2106, the first network element sends a fourth message to the terminal.

In some embodiments, after determining the first identifier of the LCS session, the first network element sends the fourth message to the first network element. Optionally, the fourth message may be a message for the UL LCS-UP transport using the first identifier.

In some embodiments, the first network element receives the fourth message sent by the terminal.

In some embodiments, the fourth message may be a UL LCS-UP transport message, for example, a second UL LCS-UP transport message. Optionally, the fourth message is configured to transmit the first identifier.

In some embodiments, the fourth message may be configured to transmit an LPP message and/or an LCS message.

In some embodiments, the fourth message includes the first identifier. In some embodiments, the first identifier may be one or more bits in the fourth message. In some embodiments, the first identifier may be an information element in the fourth message, and the information element may be one or more bits. The information element configured to identify the first identifier may be a predetermined information element, a reserved element, or any information element in the fourth message, etc.

In some embodiments, the fourth message may further include at least one of: a message type, a payload, or a payload type. The message type, the payload, and the payload type may be an information element in the fourth message, or one or more bits in the fourth message.

In some embodiments, the message type indicates a type of the fourth message. For example, the message type indicates a message type of LCS-UP transport. For example, the type of the fourth message may be the UL LCS-UP transport type.

In some embodiments, the payload indicates a container for transmitting the fourth message. For example, the payload indicates a payload or load of the LCS-UP transport.

In some embodiments, the payload type indicates a type of the container for transmitting the fourth message. For example, the payload type indicates a type of the payload of the UL LCS-UP transport; and the payload type may be an LPP message type or an LCS message type.

In some embodiments, the first network element determines the first identifier of the LCS session based on the fourth message.

At S2107, the terminal performs the association operation and/or a second operation.

In some embodiments, the terminal associates the fourth message with the information related to the LCS session indicated by the first identifier.

In some embodiments, the terminal associates a received fourth message with information related to a historical LCS session. For example, the fourth message includes information related to a current LCS session, and the fourth message also includes the first identifier; the terminal stores the information related to the historical LCS session; and the terminal may associate the information related to the LCS session in the fourth message with the information related to the historical LCS session, and the information related to the historical LCS session may be indicated by the first identifier.

In some embodiments, the fourth message may include a message identifier indicating the fourth message.

In some embodiments, the information related to the LCS session may include the positioning measurement information, the positioning result, the assistance information, the QoS parameter, and/or the related policy in the previous embodiments.

For example, a LCS session corresponds to a first identifier; the terminal receives the fourth message, and the fourth message includes the first identifier of the LCS session and first location information of the terminal; the terminal stores second location information of the terminal obtained previously for the LCS session; and the terminal may associate the first location information and the second location information of the terminal via the first identifier.

In some embodiments, the terminal performs a second operation related to the LCS session based on the fourth message.

In some embodiments, the second operation includes at least one of: determining the positioning result, storing the positioning result and/or the information related to the LCS session, or forwarding the positioning result and/or the information related to the LCS session.

For example, after receiving the information related to the LCS session, the terminal may calculate the location information, the angle information, and/or the distance information of the terminal based on the information related to the LCS session.

For example, the terminal stores the positioning result determined by the terminal locally; or the terminal receives the positioning result determined by the first network element and stores it locally.

For example, the terminal sends the positioning result to other network elements, for example, to a GMLC or an AMF, etc.

In some embodiments, names of information are not limited to those specified in the embodiments. The terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, the terms such as "send", "report", "deliver", "transmit", "bidirectional transmission", "send and/or receive" may be used interchangeably.

In some embodiments, the terms such as "certain", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

The method for processing information involved in the embodiments of the present disclosure may include at least one of S2101 to S2107. For example, S2101 may be implemented as an independent embodiment; S2102 may be implemented as an independent embodiment; S2103 may be implemented as an independent embodiment; the combination of S2104 and S2105 may be implemented as an independent embodiment; the combination of S2106 and S2107 may be implemented as an independent embodiment; the combination of S2101 and S2102 may be implemented as an independent embodiment; the combination of S2102 and S2103 may be implemented as an independent embodiment; the combination of S2101, S2102, and S2103 may be implemented as an independent embodiment; the combination of S2103, S2104, and S2105 may be implemented as an independent embodiment; the combination of S2103, S2106, and S2107 may be implemented as an independent embodiment; the combination of S2102, S2103, S2104, and S2105 may be implemented as an independent embodiment; the combination of S2102, S2103, S2106, and S2107 may be implemented as an independent embodiment; the combination of S2101, S2102, S2103, S2104, and S2105 may be implemented as an independent embodiment; and the combination of S2101, S2102, S2103, S2106, and S2107 may be implemented as an independent embodiment.

In some embodiments, the combination of S2101A, S2102A, S2104, and S2105 may be implemented as an independent embodiment; and the combination of S2101A, S2102A, S2106, and S2107 may be implemented as an independent embodiment.

In some embodiments, the combination of S2101B, S2102B, S2104, and S2105 may be implemented as an independent embodiment; and the combination of S2101B, S2102B, S2106, and S2107 may be implemented as an independent embodiment.

In some embodiments, the combination of S2102A, S2103A, S2104, and S2105 may be implemented as an independent embodiment; and the combination of S2102A, S2103A, S2106, and S2107 may be implemented as an independent embodiment.

In some embodiments, the combination of S2102B, S2103B, S2104, and S2105 may be implemented as an independent embodiment; and the combination of S2102B, S2103B, S2106, and S2107 may be implemented as an independent embodiment.

In some embodiments, S2101, S2104, and S2105 may be optional, and one or more of these steps may be omitted or replaced in different embodiments.

In some embodiments, S2101, S2106, and S2107 may be optional, and one or more of these steps may be omitted or replaced in different embodiments.

In some embodiments, S2103, S2104, and S2105 may be optional, and one or more of these steps may be omitted or replaced in different embodiments.

In some embodiments, S2103, S2106, and S2107 may be optional, and one or more of these steps may be omitted or replaced in different embodiments.

In some embodiments, S2101, S2103, S2104, and S2105 may be optional, and one or more of these steps may be omitted or replaced in different embodiments.

In some embodiments, S2101, S2103, S2106, and S2107 may be optional, and one or more of these steps may be omitted or replaced in different embodiments.

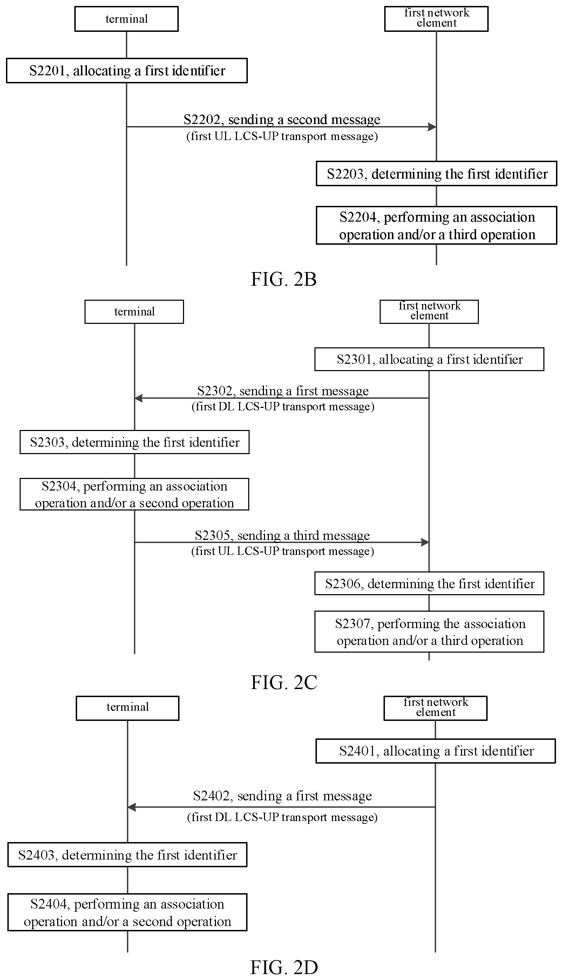

FIG. 2B is an interaction diagram illustrating a method for processing information according to some embodiments of the present disclosure. As shown in FIG. 2B, some embodiments of the present disclosure relate to a method for processing information, applied to a system 100 for processing information. The above method includes the following steps at S2201 to S2204.

At S2201, a terminal allocates a first identifier.

For optional implementations of S2201, reference may be made to the optional implementations of S2101A in FIG. 2A and other related parts of the embodiments associated with FIG. 2A, which will not be repeated here.

At S2202, the terminal sends a second message to a first network element.

For optional implementations of S2202, reference may be made to the optional implementations of S2102A in FIG. 2A and other related parts of the embodiments associated with FIG. 2A, which will not be repeated here.

At S2203, the first network element determines the first identifier.

For optional implementations of S2203, reference may be made to the optional implementations of S2103A in FIG. 2A and other related parts of the embodiments associated with FIG. 2A, which will not be repeated here.

At S2204, the first network element performs an association operation and/or a third operation.

For optional implementations of S2204, reference may be made to the optional implementations of S2105 in FIG. 2A and other related parts of the embodiments associated with FIG. 2A, which will not be repeated here.

The embodiments may be implemented individually or in combination with each other. For optional implementations, reference may be made to the optional implementations of the steps in FIG. 2A, which will not be repeated here.

FIG. 2C is an interaction diagram illustrating a method for processing information according to some embodiments of the present disclosure. As shown in FIG. 2C, some embodiments of the present disclosure relate to a method for processing information, applied to a system 100 for processing information. The above method includes the following steps at S2301 to S2307.

At S2301, a first network element allocates a first identifier.

For optional implementations of S2301, reference may be made to the optional implementations of S2101B in FIG. 2A and other related parts of the embodiments associated with FIG. 2A, which will not be repeated here.

At S2302, the first network element sends a first message to a terminal.

For optional implementations of S2302, reference may be made to the optional implementations of S2102B in FIG. 2A and other related parts of the embodiments associated with FIG. 2A, which will not be repeated here.

At S2303, the terminal determines the first identifier.

For optional implementations of S2303, reference may be made to the optional implementations of S2103B in FIG. 2A and other related parts of the embodiments associated with FIG. 2A, which will not be repeated here.

At S2304, the terminal performs an association operation and/or a second operation.

In some embodiments, the terminal performs the association operation and/or the second operation based on the first message.

At S2305, the terminal sends a third message to the first network element.

For optional implementations of S2305, reference may be made to the optional implementations of S2104 in FIG. 2A and other related parts of the embodiments associated with FIG. 2A, which will not be repeated here.

At S2306, the first network element determines the first identifier.

In some embodiments, the first network element determines the first identifier of the LCS session based on the third message.

At S2307, the first network element performs the association operation and/or a third operation.

For optional implementations of S2307, reference may be made to the optional implementations of S2105 in FIG. 2A and other related parts of the embodiments associated with FIG. 2A, which will not be repeated here.

The above embodiments may be implemented individually or in combination with each other. For optional implementations, reference may be made to the optional implementations of the steps in FIG. 2A, which will not be repeated here.

FIG. 2D is an interaction diagram illustrating a method for processing information according to some embodiments of the present disclosure. As shown in FIG. 2C, some embodiments of the present disclosure relate to a method for processing information, applied to a system 100 for processing information. The above method includes the following steps at S2401 to S2404.

At S2401, a first network element allocates a first identifier.

For optional implementations of S2401, reference may be made to the optional implementations of S2101B in FIG. 2A and other related parts of the embodiments associated with FIG. 2A, which will not be repeated here.

At S2402, the first network element sends a first message to a terminal.

For optional implementations of S2402, reference may be made to the optional implementations of S2102B in FIG. 2A and other related parts of the embodiments associated with FIG. 2A, which will not be repeated here.

At S2403, the terminal determines the first identifier.

For optional implementations of S2403, reference may be made to the optional implementations of S2103B in FIG. 2A and other related parts of the embodiments associated with FIG. 2A, which will not be repeated here.

At S2404, the terminal performs an association operation and/or a second operation.

For optional implementations of S2404, reference may be made to the optional implementations of S2107 in FIG. 2A and other related parts of the embodiments associated with FIG. 2A, which will not be repeated here.

The above embodiments may be implemented individually or in combination with each other. For optional implementations, reference may be made to the optional implementations of the steps in FIG. 2A, which will not be repeated here.

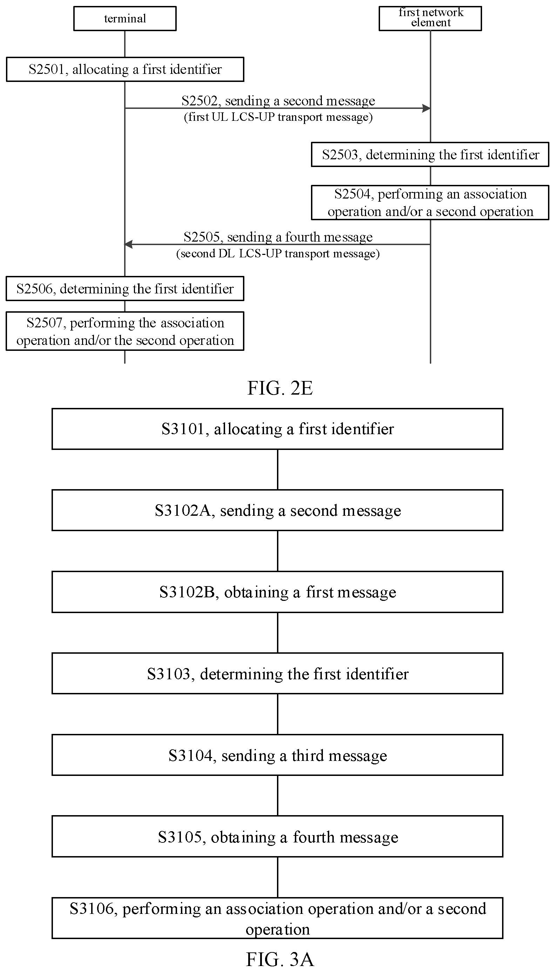

FIG. 2E is an interaction diagram illustrating a method for processing information according to some embodiments of the present disclosure. As shown in FIG. 2E, some embodiments of the present disclosure relate to a method for processing information, applied to a system 100 for processing information. The above method includes the following steps at S2501 to S2507.

At S2501, a terminal allocates a first identifier.

For optional implementations of S2501, reference may be made to the optional implementations of S2101A in FIG. 2A and other related parts of the embodiments associated with FIG. 2A, which will not be repeated here.

At S2502, the terminal sends a second message to a first network element.

For optional implementations of S2502, reference may be made to the optional implementations of S2102A in FIG. 2A and other related parts of the embodiments associated with FIG. 2A, which will not be repeated here.

At S2503, the first network element determines the first identifier.

For optional implementations of S2503, reference may be made to the optional implementations of S2103A in FIG. 2A and other related parts of the embodiments associated with FIG. 2A, which will not be repeated here.

At S2504, the first network element performs an association operation and/or a second operation.

In some embodiments, the first network element performs the association operation and/or the second operation based on the second message.

At S2505, the first network element sends a fourth message to the terminal.

For optional implementations of S2505, reference may be made to the optional implementations of S2106 in FIG. 2A and other related parts of the embodiments associated with FIG. 2A, which will not be repeated here.

At S2506, the terminal determines the first identifier.

In some embodiments, the terminal determines the first identifier of the LCS session based on the fourth message.

At S2507, the terminal performs the association operation and/or the second operation.

For optional implementations of S2507, reference may be made to the optional implementations of S2107 in FIG. 2A and other related parts of the embodiments associated with FIG. 2A, which will not be repeated here.

The above embodiments may be implemented individually or in combination with each other. For optional implementations, reference may be made to the optional implementations of the steps in FIG. 2A, which will not be repeated here.

FIG. 3A is a flowchart illustrating a method for processing information according to some embodiments of the present disclosure. As shown in FIG. 3A, some embodiments of the present disclosure relate to a method for processing information, performed by a terminal. The above method includes the following steps at S3101 to S3106.

At S3101, a first identifier is allocated.

For optional implementations of S3101, reference may be made to the optional implementations of S2101A in FIG. 2A and other related parts of the embodiments associated with FIG. 2A, which will not be repeated here.

In some embodiments, the terminal allocates the first identifier of the LCS session.

At S3102A, a second message is sent.

For optional implementations of S3102A, reference may be made to the optional implementations of S2102A in FIG. 2A and other related parts of the embodiments associated with FIG. 2A, which will not be repeated here.

In some embodiments, the terminal sends the second message to a first network element, which is not limited herein, and may also send the second message to other entities.

At S3102B, a first message is obtained.

For optional implementations of S3102B, reference may be made to the optional implementations of S2102B in FIG. 2A and other related parts of the embodiments associated with FIG. 2A, which will not be repeated here.

In some embodiments, the terminal receives the first message sent by the first network element, which is not limited herein, and may also receive the first message sent by other entities.

In some embodiments, the terminal obtains the first message specified by a protocol.

In some embodiments, the terminal obtains the first message from upper layer(s).

In some embodiments, the terminal obtains the first message by performing processing.

In some embodiments, S3102B is omitted, and the terminal autonomously implements the function indicated by the first message, or the above function is default.

In some embodiments, S3102 includes S3102A and/or S3102B.

At S3103, the first identifier is determined.

For optional implementations of S3103, reference may be made to the optional implementations of S2103B in FIG. 2A and other related parts of the embodiments associated with FIG. 2A, which will not be repeated here.

In some embodiments, the terminal determines the first identifier based on the first message.

At S3104, a third message is sent.

For optional implementations of S3104, reference may be made to the optional implementations of S2104 in FIG. 2A and other related parts of the embodiments associated with FIG. 2A, which will not be repeated here.

In some embodiments, the terminal sends the third message to the first network element, which is not limited herein, and may also send the third message to other entities.

At S3105, a fourth message is obtained.

For optional implementations of S3105, reference may be made to the optional implementations of S2106 in FIG. 2A and other related parts of the embodiments associated with FIG. 2A, which will not be repeated here.

In some embodiments, the terminal receives the fourth message sent by the first network element, which is not limited herein, and may also receive the fourth message sent by other entities.

In some embodiments, the terminal obtains the fourth message specified by a protocol.

In some embodiments, the terminal obtains the fourth message from upper layer(s).

In some embodiments, the terminal obtains the fourth message by performing processing.

In some embodiments, S3105 is omitted, and the terminal autonomously implements the function indicated by the fourth message, or the above function is default.

At S3106, an association operation and/or a second operation are performed.

For optional implementations of S3106, reference may be made to the optional implementations of S2107 in FIG. 2A and other related parts of the embodiments associated with FIG. 2A, which will not be repeated here.

The method for processing information involved in the embodiments of the present disclosure may include at least one of S3101 to S3106. For example, S3101 may be implemented as an independent embodiment; S3102 may be implemented as an independent embodiment; S3103 may be implemented as an independent embodiment; S3104 may be implemented as an independent embodiment; the combination of S3105 and S3106 may be implemented as an independent embodiment; the combination of S3101 and S3102 may be implemented as an independent embodiment; the combination of S3102 and S3103 may be implemented as an independent embodiment; the combination of S3101, S3102, and S3103 may be implemented as an independent embodiment; the combination of S3103 and S3104 may be implemented as an independent embodiment; the combination of S3103, S3105, and S3106 may be implemented as an independent embodiment; the combination of S3102, S3103, and S3104 may be implemented as an independent embodiment; the combination of S3102, S3103, S3105, and S3106 may be implemented as an independent embodiment; the combination of S3101, S3102, S3103, and S3104 may be implemented as an independent embodiment; and the combination of S3101, S3102, S3103, S3105, and S3106 may be implemented as an independent embodiment.

In some embodiments, the combination of S3101, S3102A, and S3104 may be implemented as an independent embodiment; and the combination of S3101, S3105, and S3106 may be implemented as an independent embodiment.

In some embodiments, the combination of S3102B, S3103, and S3104 may be implemented as an independent embodiment; and the combination of S3102B, S3103, S3105, and S3106 may be implemented as an independent embodiment.

In some embodiments, S3101 and S3104 may be optional, and one or more of these steps may be omitted or replaced in different embodiments.

In some embodiments, S3101, S3105, and S3106 may be optional, and one or more of these steps may be omitted or replaced in different embodiments.

In some embodiments, S3103 and S3104 may be optional, and one or more of these steps may be omitted or replaced in different embodiments.

In some embodiments, S3103, S3105, and S3106 may be optional, and one or more of these steps may be omitted or replaced in different embodiments.

In some embodiments, S3101, S3103, and S3104 may be optional, and one or more of these steps may be omitted or replaced in different embodiments.

In some embodiments, S3101, S3103, S3105, and S3106 may be optional, and one or more of these steps may be omitted or replaced in different embodiments.

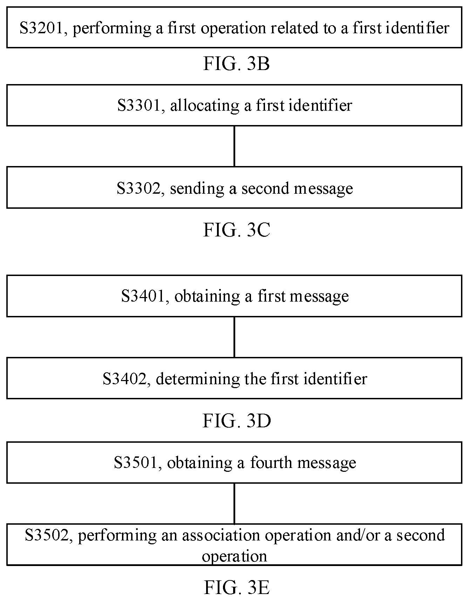

FIG. 3B is a flowchart illustrating a method for processing information according to some embodiments of the present disclosure. As shown in FIG. 3B, some embodiments of the present disclosure relate to a method for processing information, performed by a terminal. The above method includes the following step at S3201.

At S3201, a first operation related to a first identifier is performed.

For optional implementations of S3201, reference may be made to the optional implementations of S2102 in FIG. 2A (for example, including S2102A and/or S2102B), or S3102 in FIG. 3A (for example, including S3102A and/or S3102B), and other related parts of the embodiments associated with FIG. 2A and FIG. 3A, which will not be repeated here.

In some embodiments, the first identifier is configured to identify an LCS session.

In some embodiments, performing the first operation related to the first identifier includes: receiving a first message sent by a first network element, in which the first message includes the first identifier; or sending a second message to a first network element, in which the second message includes the first identifier.

In some embodiments, the method further includes: determining the first identifier of the LCS session based on the first message; or determining the first identifier of the LCS session based on a historical first message; or allocating the first identifier for the LCS session.

In some embodiments, the first message is configured to transmit an LPP message and/or an LCS message; and/or the second message is configured to transmit an LPP message and/or an LCS message.

In some embodiments, the method further includes: sending a third message to the first network element, in which the third message includes the first identifier.

In some embodiments, the third message further includes at least one of: a message type for indicating a type of LCS-UP transport; a payload for indicating a payload of LCS-UP transport; or a payload type for indicating a payload type of LCS-UP transport.

In some embodiments, the method further includes: receiving a fourth message sent by the first network element, in which the fourth message includes the first identifier.

In some embodiments, the fourth message further includes at least one of: a message type for indicating a type of LCS-UP transport; a payload for indicating a payload of LCS-UP transport; or a payload type for indicating a payload type of LCS-UP transport.

In some embodiments, the method further includes: associating the fourth message with information related to the LCS session indicated by the first identifier; or performing, based on the fourth message, a second operation related to the LCS session.

In some embodiments, the first network element is: an LMF, and/or an SF.

The above embodiments may be implemented individually or in combination with each other. For optional implementations, reference may be made to the optional implementations of the steps in FIG. 2A and FIG. 3A, which will not be repeated here.

FIG. 3C is a flowchart illustrating a method for processing information according to some embodiments of the present disclosure. As shown in FIG. 3C, some embodiments of the present disclosure relate to a method for processing information, performed by a terminal. The above method includes the following steps at S3301 to S3302.

At S3301, a first identifier is allocated.

For optional implementations of S3301, reference may be made to the optional implementations of S2101A in FIG. 2A, or S3101 in FIG. 3A, and other related parts of the embodiments associated with FIG. 2A and FIG. 3A, which will not be repeated here.

At S3302, a second message is sent. In some embodiments, the second message includes the first identifier.

For optional implementations of S3302, reference may be made to the optional implementations of S2102A in FIG. 2A, or S3102A in FIG. 3A, and other related parts of the embodiments associated with FIG. 2A and FIG. 3A, which will not be repeated here.

The above embodiments may be implemented individually or in combination with each other. For optional implementations, reference may be made to the optional implementations of the steps in FIG. 2A and FIG. 3A, which will not be repeated here.

FIG. 3D is a flowchart illustrating a method for processing information according to some embodiments of the present disclosure. As shown in FIG. 3D, some embodiments of the present disclosure relate to a method for processing information, performed by a terminal. The above method includes the following steps at S3401 to S3402.

At S3401, a first message is obtained. In some embodiments, the first message includes the first identifier.

For optional implementations of S3401, reference may be made to the optional implementations of S2102B in FIG. 2A, or S3102B in FIG. 3A, and other related parts of the embodiments associated with FIG. 2A and FIG. 3A, which will not be repeated here.

At S3402, the first identifier is determined. In some embodiments, the terminal determines the first identifier based on the first message.

For optional implementations of S3402, reference may be made to the optional implementations of S2103B in FIG. 2A, or S3103 in FIG. 3A, and other related parts of the embodiments associated with FIG. 2A and FIG. 3A, which will not be repeated here.

The above embodiments may be implemented individually or in combination with each other. For optional implementations, reference may be made to the optional implementations of the steps in FIG. 2A and FIG. 3A, which will not be repeated here.

FIG. 3E is a flowchart illustrating a method for processing information according to some embodiments of the present disclosure. As shown in FIG. 3E, some embodiments of the present disclosure relate to a method for processing information, performed by a terminal. The above method includes the following steps at S3501 to S3502

At S3501, a fourth message is obtained.

For optional implementations of S3501, reference may be made to the optional implementations of S2106 in FIG. 2A, or S3105 in FIG. 3A, and other related parts of the embodiments associated with FIG. 2A and FIG. 3A, which will not be repeated here.

At S3502, an association operation and/or a second operation are performed.

For optional implementations of S3502, reference may be made to the optional implementations of S2107 in FIG. 2A, or S3106 in FIG. 3A, and other related parts of the embodiments associated with FIG. 2A and FIG. 3A, which will not be repeated here.

The above embodiments may be implemented individually or in combination with each other. For optional implementations, reference may be made to the optional implementations of the steps in FIG. 2A and FIG. 3A, which will not be repeated here.

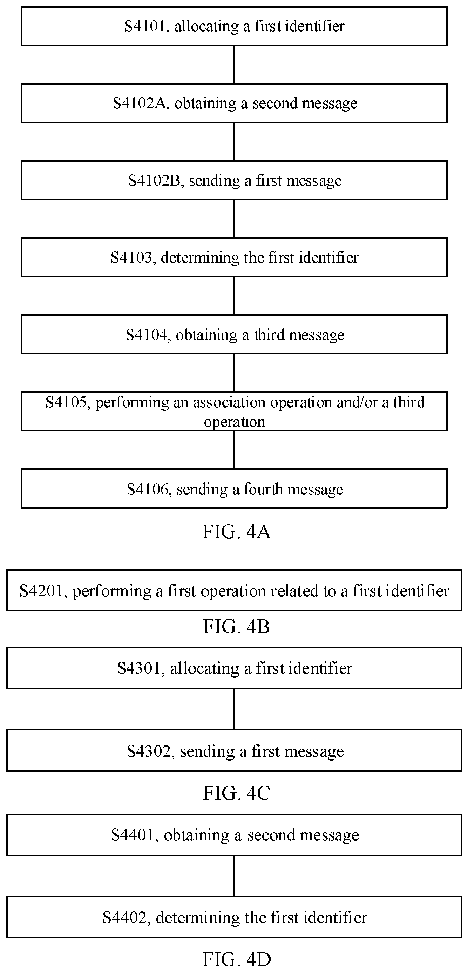

FIG. 4A is a flowchart illustrating a method for processing information according to some embodiments of the present disclosure. As shown in FIG. 4A, some embodiments of the present disclosure relate to a method for processing information, performed by a first network element. The above method includes the following steps at S4101 to S4106.

At S4101, a first identifier is allocated.

For optional implementations of S4101, reference may be made to the optional implementations of S2101B in FIG. 2A and other related parts of the embodiments associated with FIG. 2A, which will not be repeated here.

In some embodiments, the first network element allocates the first identifier of the LCS session.

At S4102A, a second message is obtained.

For optional implementations of S4102A, reference may be made to the optional implementations of S2102 in FIG. 2A and other related parts of the embodiments associated with FIG. 2A, which will not be repeated here.

In some embodiments, the first network element receives the second message sent by a terminal, which is not limited herein, and may also receive the second message sent by other entities.

In some embodiments, the first network element obtains the second message specified by a protocol.

In some embodiments, the first network element obtains the second message from upper layer(s).

In some embodiments, the first network element obtains the second message by performing processing.

In some embodiments, S4102A is omitted, and the first network element autonomously implements the function indicated by the second message, or the above function is default.

At S4102B, a first message is sent.

For optional implementations of S4102B, reference may be made to the optional implementations of S2102B in FIG. 2A and other related parts of the embodiments associated with FIG. 2A, which will not be repeated here.

In some embodiments, the first network element sends the first message to the terminal, which is not limited herein, and may also send the first message to other entities.

In some embodiments, S4102 includes S4102A and/or S4102B.

At S4103, the first identifier is determined.

For optional implementations of S4103, reference may be made to the optional implementations of S2103A in FIG. 2A and other related parts of the embodiments associated with FIG. 2A, which will not be repeated here.

In some embodiments, the terminal determines the first identifier based on the second message.

At S4104, a third message is obtained.

For optional implementations of S4104, reference may be made to the optional implementations of S2104 in FIG. 2A and other related parts of the embodiments associated with FIG. 2A, which will not be repeated here.

In some embodiments, the first network element receives the third message sent by the terminal, which is not limited herein, and may also receive the third message sent by other entities.

In some embodiments, the first network element obtains the third message specified by a protocol.

In some embodiments, the first network element obtains the third message from upper layer(s).

In some embodiments, the first network element obtains the third message by performing processing.

In some embodiments, S4104 is omitted, and the first network element autonomously implements the function indicated by the third message, or the above function is default.

At S4105, an association operation and/or a third operation are performed.

For optional implementations of S4105, reference may be made to the optional implementations of S2105 in FIG. 2A and other related parts of the embodiments associated with FIG. 2A, which will not be repeated here.

At S4106, a fourth message is sent.

For optional implementations of S4106, reference may be made to the optional implementations of S2106 in FIG. 2A and other related parts of the embodiments associated with FIG. 2A, which will not be repeated here.

In some embodiments, the first network element sends the fourth message to the terminal, which is not limited herein, and may also send the fourth message to other entities.

The method for processing information involved in the embodiments of the present disclosure may include at least one of S4101 to S4106. For example, S4101 may be implemented as an independent embodiment; S4102 may be implemented as an independent embodiment; S4103 may be implemented as an independent embodiment; the combination of S4104 and S4105 may be implemented as an independent embodiment; the combination of S4106 may be implemented as an independent embodiment; the combination of S4101 and S4102 may be implemented as an independent embodiment; the combination of S4102 and S4103 may be implemented as an independent embodiment; the combination of S4101, S4102, and S4103 may be implemented as an independent embodiment; the combination of S4103, S4104, and S4105 may be implemented as an independent embodiment; the combination of S4103 and S4106 may be implemented as an independent embodiment; the combination of S4102, S4103, S4104, and S4105 may be implemented as an independent embodiment; the combination of S4102, S4103, and S4106 may be implemented as an independent embodiment; the combination of S4101, S4102, S4103, S4104, and S4105 may be implemented as an independent embodiment; and the combination of S4101, S4102, S4103, and S4106 may be implemented as an independent embodiment.

In some embodiments, the combination of S4101, S4102B, S4104, and S4105 may be implemented as an independent embodiment; and the combination of S4101 and S4106 may be implemented as an independent embodiment.

In some embodiments, the combination of S4102A, S4103, S4104, and S4105 may be implemented as an independent embodiment; and the combination of S4102A, S4103, and S4106 may be implemented as an independent embodiment.

In some embodiments, S4101, S4104, and S4105 may be optional, and one or more of these steps may be omitted or replaced in different embodiments.

In some embodiments, S4101 and S4106 may be optional, and one or more of these steps may be omitted or replaced in different embodiments.

In some embodiments, S4103, S4104, and S4105 may be optional, and one or more of these steps may be omitted or replaced in different embodiments.

In some embodiments, S4103 and S4106 may be optional, and one or more of these steps may be omitted or replaced in different embodiments.

In some embodiments, S4101, S4103, S4104, and S4105 may be optional, and one or more of these steps may be omitted or replaced in different embodiments.

In some embodiments, S4101, S4103, and S4106 may be optional, and one or more of these steps may be omitted or replaced in different embodiments.

FIG. 4B is a flowchart illustrating a method for processing information according to some embodiments of the present disclosure. As shown in FIG. 4B, some embodiments of the present disclosure relate to a method for processing information, performed by a network device. The above method includes the following step at S4201.

At S4201, a first operation related to a first identifier is performed.

For optional implementations of S4201, reference may be made to the optional implementations of S2102 in FIG. 2A (for example, including S2102A and/or S2102B), or S4102 in FIG. 4A (for example, including S4102A and/or S4102B), and other related parts of the embodiments associated with FIG. 2A and FIG. 4A, which will not be repeated here.

In some embodiments, the first identifier is configured to identify an LCS session.

In some embodiments, performing the first operation related to the first identifier includes: sending a first message to a terminal, in which the first message includes the first identifier; or receiving a second message sent by a terminal, in which the second message includes the first identifier.

In some embodiments, the method further includes: determining the first identifier of the LCS session based on the second message; or determining the first identifier of the LCS session based on a historical second message; or allocating the first identifier for the LCS session.

In some embodiments, the first message is configured to transmit an LPP message and/or an LCS message; and/or the second message is configured to transmit an LPP message and/or an LCS message.

In some embodiments, the method further includes: receiving a third message sent by the terminal, in which the third message includes the first identifier.

In some embodiments, the third message further includes at least one of: a message type for indicating a type of LCS-UP transport; a payload for indicating a payload of LCS-UP transport; or a payload type for indicating a payload type of LCS-UP transport.

In some embodiments, the method further includes: associating the third message with information related to the LCS session indicated by the first identifier; or performing, based on the third message, a third operation related to the LCS session.

In some embodiments, the method further includes: sending a fourth message to the terminal, in which the fourth message includes the first identifier.

In some embodiments, the fourth message further includes at least one of: a message type for indicating a type of LCS-UP transport; a payload for indicating a payload of LCS-UP transport; or a payload type for indicating a payload type of LCS-UP transport.

In some embodiments, the first network element is: an LMF, and/or an SF.

The embodiments may be implemented individually or in combination with each other. For optional implementations, reference may be made to the optional implementations of the steps in FIG. 2A and FIG. 4A, which will not be repeated here.

FIG. 4C is a flowchart illustrating a method for processing information according to some embodiments of the present disclosure. As shown in FIG. 4C, some embodiments of the present disclosure relate to a method for processing information, performed by a terminal. The above method includes the following steps at S4301 to S4302.

At S4301, a first identifier is allocated.

For optional implementations of S4301, reference may be made to the optional implementations of S2101B in FIG. 2A, or S4101 in FIG. 4A, and other related parts of the embodiments associated with FIG. 2A and FIG. 4A, which will not be repeated here.

At S4302, a first message is sent. In some embodiments, the first message includes the first identifier.

For optional implementations of S4302, reference may be made to the optional implementations of S2102B in FIG. 2A, or S4102B in FIG. 4A, and other related parts of the embodiments associated with FIG. 2A and FIG. 4A, which will not be repeated here.

The above embodiments may be implemented individually or in combination with each other. For optional implementations, reference may be made to the optional implementations of the steps in FIG. 2A and FIG. 4A, which will not be repeated here.

FIG. 4D is a flowchart illustrating a method for processing information according to some embodiments of the present disclosure. As shown in FIG. 4D, some embodiments of the present disclosure relate to a method for processing information, performed by a terminal. The above method includes the following steps at S4401 to S4402.

At S4401, a second message is obtained. In some embodiments, the second message includes the first identifier.

For optional implementations of S4401, reference may be made to the optional implementations of S2102A in FIG. 2A, or S4102A in FIG. 4A, and other related parts of the embodiments associated with FIG. 2A and FIG. 4A, which will not be repeated here.

At S4402, the first identifier is determined. In some embodiments, the terminal determines the first identifier based on the first message.

For optional implementations of S4402, reference may be made to the optional implementations of S2103A in FIG. 2A, or S4103 in FIG. 4A, and other related parts of the embodiments associated with FIG. 2A and FIG. 4A, which will not be repeated here.

The above embodiments may be implemented individually or in combination with each other. For optional implementations, reference may be made to the optional implementations of the steps in FIG. 2A and FIG. 4A, which will not be repeated here.

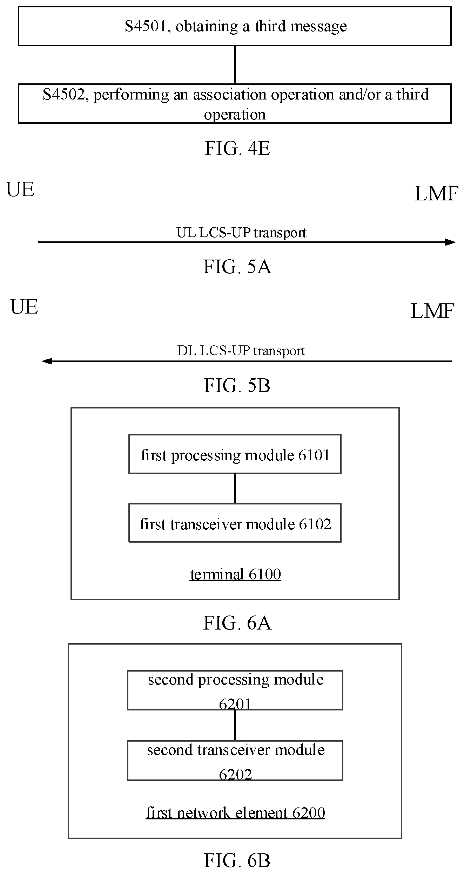

FIG. 4E is a flowchart illustrating a method for processing information according to some embodiments of the present disclosure. As shown in FIG. 4E, some embodiments of the present disclosure relate to a method for processing information, performed by a first network element. The above method includes the following steps at S4501 to S4502.

At S4501, a third message is obtained.

For optional implementations of S4501, reference may be made to the optional implementations of S2104 in FIG. 2A, or S4104 in FIG. 4A, and other related parts of the embodiments associated with FIG. 2A and FIG. 4A, which will not be repeated here.

At S4502, an association operation and/or a third operation are performed.

For optional implementations of S4502, reference may be made to the optional implementations of S2105 in FIG. 2A, or S4105 in FIG. 4A, and other related parts of the embodiments associated with FIG. 2A and FIG. 4A, which will not be repeated here.

The embodiments may be implemented individually or in combination with each other. For optional implementations, reference may be made to the optional implementations of the steps in FIG. 2A and FIG. 4A, which will not be repeated here.

As shown in FIG. 5A, the embodiments of the present disclosure provide a method for processing information, applied to a UL LCS-UP transport procedure. The method for processing information includes the following steps at S5100A to S5102.

At S5100A, an LCS session identity is allocated by an LMF. A UE obtains a value of the LCS session identity from the DL LCS-UP transport message (user plane message, and non-initial LCS session message) previously received from the LMF.

In some embodiments, the LCS session identity may be the first identifier in the previous embodiments; the DL LCS-UP transport message may be the first message in the previous embodiments; and the UE may be the terminal in the previous embodiments.

At S5100B, the LCS session identity is allocated by the UE. The UE sets the value of the LCS session identity as determined in a previous LCS session message, or determines a new LCS session value for the LCS session (for an initial LCS session message case).

At S5101, the UE sends the LCS session identity determined in S5100 (including S5100A or S5100B), a message type, an LCS-UP payload type and an LCS-UP payload to LMF via a UL LCS-UP transport message.

In some embodiments, the UL LCS-UP transport message may be the third message in the previous embodiments.

At S5102, the LMF receives the UL LCS-UP transport message from the UE via a user plane, and associates UL LCS-UP transport with the LCS session as indicated by the LCS session identity, and performs a corresponding calculation, save, and/or forward procedure.

As shown in FIG. 5B, the embodiments of the present disclosure provide a method for processing information, applied to a DL LCS-UP transport procedure. The method for processing information includes the following steps at S5200A to S5202.

At S5200A, an LCS session identity is allocated by an LMF. The LMF sets a value of the LCS session identity as determined in a former LCS session message, or determines a new LCS session value for the LCS session (for an initial LCS session message case).

Optionally, the LCS session identity may be the first identifier in the previous embodiments; and the UE may be the terminal in the previous embodiments.

At S5200B, the LCS session identity is allocated by UE. The LMF sets the value of the LCS session identity as determined in the former LCS session message, or determines the new LCS session value for the LCS session (for initial LCS session message case).

Optionally, the UL LCS-UP transport message may be the second message in the previous embodiments.

At S5201, the LMF sends the LCS session identity determined in S5200 (including S5200A or S5200B), a message type, an LCS-UP payload type and an LCS-UP payload to the UE via a DL LCS-UP transport message.

Optionally, the DL LCS-UP transport message may be the fourth message in the previous embodiments.

At S5202, the UE receives the DL LCS-UP transport message from the LMF via the user plane, associates the DL LCS-UP transport with the LCS session indicated by the LCS session identity, and performs corresponding calculation, storage, and forwarding processes.

In some embodiments, content of the UL LCS-UP transport message is shown in Table 3. The content of the UL LCS-UP transport message may include an IEI, an IE, a type/reference, presence, a format, and/or a length. The length is in bytes; and the payload may be a payload. The DL LCS-UP transport message is sent by the UE to the LMF to transmit the LPP message or the location supplementary service message. In some embodiments, the location supplementary service message may be an LCS message. The message type is UL LCS-UP transport, with significance: dual (i.e., related to originate or terminate an access and a network); and a direction: UE to network.

**Table 3**

| **IEI** | **IE** | **Type/Reference** | **Presence** | **Format** | **Length** |
|---|---|---|---|---|---|
| | LCS session ID | LCS session identity 112.x | | | |
| | UL LCS-UP TRANSPORT identity | Message type 10.2.3 | M | V | 1 |
| | LCS-UP payload type | LCS-UP payload 10.2.2 | M | V | 1 |
| | LCS-UP payload | LCS-UP payload 10.2.1 | M | LV-E | 3-65537 |

In some embodiments, content of the DL LCS-UP transport message is shown in Table 4. The content of the DL LCS-UP transport message may include an IEI, an IE, a type/reference, presence, a format, and/or a length. The length is in bytes; and the payload may be a payload. The DL LCS-UP transport message is sent by the LMF to the UE to transmit the LPP message or the location supplementary service message. In some embodiments, the location supplementary service message may be an LCS message. The message type is DL LCS-UP transport, with significance: dual (i.e., related to originate or terminate an access and a network); and a direction: network to UE.

**Table 4**

| **IEI** | **IE** | **Type/Reference** | **Presence** | **Format** | **Length** |
|---|---|---|---|---|---|
| | LCS session ID | LCS session identity 112.x | | | |
| | UL LCS-UP TRANSPORT identity | Message type 10.2.3 | M | V | 1 |
| | LCS-UP payload type | LCS-UP payload 10.2.2 | M | V | 1 |
| | LCS-UP payload | LCS-UP payload 10.2.1 | M | LV-E | 3-65537 |

In some embodiments, the purpose of the LCS session identity information element is to identify an LCS session.

In some embodiments, an LCS-UP payload type information element is coded as shown in Table 5 and Table 6; and the LCS-UP payload type information element is a type 1 information element.

**Table 5**

| | |
|---|---|
| LCS session identity information element | LCS session identity value |

**Table 6**

| LCS-UP payload type value (octet 1) | | | | |
|---|---|---|---|---|
| Bits | | | | |
| 4 | 3 | 2 | 1 | |
| 0 | 0 | 0 | 0 | No LCS session identity assigned |
| 0 | 0 | 0 | 1 | LCS session identity value 1 |
| 0 | 0 | 1 | 0 | LCS session identity value 2 |
| 0 | 0 | 1 | 1 | LCS session identity value 3 |
| 0 | 1 | 0 | 0 | LCS session identity value 4 |
| 0 | 1 | 0 | 1 | LCS session identity value 5 |
| 0 | 1 | 1 | 0 | LCS session identity value 6 |
| 0 | 1 | 1 | 1 | LCS session identity value 7 |
| 1 | 0 | 0 | 0 | LCS session identity value 8 |
| 1 | 0 | 0 | 1 | LCS session identity value 9 |
| 1 | 0 | 1 | 0 | LCS session identity value 10 |
| 1 | 0 | 1 | 1 | LCS session identity value 11 |
| 1 | 1 | 0 | 0 | LCS session identity value 12 |
| 1 | 1 | 0 | 1 | LCS session identity value 13 |
| 1 | 1 | 1 | 0 | LCS session identity value 14 |
| 1 | 1 | 1 | 1 | LCS session identity value 15 |
| All other values are spare. | | | | |

In the embodiments of the present disclosure, some or all steps and optional implementations thereof may be arbitrarily combined with some or all steps in other embodiments, and may also be arbitrarily combined with optional implementations of other embodiments.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (e.g., an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 6A is a block diagram illustrating a terminal 6100 according to some embodiments of the present disclosure. As shown in FIG. 6A, the terminal 6100 includes: a first processing module 6101 and a first transceiver module 6102. In some embodiments, the first processing module 6101 is configured to perform a second operation. Optionally, the first processing module 6101 is configured to perform at least one of processing steps performed by the terminal 6100 in any one of the above methods (for example, steps such as S2101A, S2103B and/or S2107, which is not limited herein), which will not be repeated here. Optionally, the first transceiver module 6102 is configured to perform at least one of receiving and/or sending steps performed by the terminal 6100 in any one of the above methods (for example, steps such as S2102, S2104 and/or S2106, which is not limited herein), which will not be repeated here.

FIG. 6B is a block diagram illustrating a first network element 6200 according to some embodiments of the present disclosure. As shown in FIG. 6B, the first network element 6200 includes: a second processing module 6201 and a second transceiver module 6202. In some embodiments, the second processing module 6201 is configured to perform a third operation. Optionally, the second processing module 6201 is configured to perform at least one of processing steps performed by the first network element 6200 in any one of the above methods (for example, steps such as S2101B, S2103A and/or S2105, which is not limited herein), which will not be repeated here. Optionally, the first transceiver module 6202 is configured to perform at least one of receiving and/or sending steps performed by the first network element 6200 in any one of the above methods (for example, steps such as S2102, S2104 and/or S2106, which is not limited herein), which will not be repeated here.

In some embodiments, the transceiver module may include a sending module and/or a receiving module, and the sending module and the receiving module may be separate or integrated together. Optionally, the transceiver module may be replaced with a transceiver. For example, the first transceiver module includes a first sending module and/or a first receiving module. For example, the second transceiver module includes a second sending module and/or a second receiving module.

In some embodiments, the processing module may be a module, or may include a plurality of sub-modules. Optionally, the plurality of sub-modules respectively perform all or part of the steps required to be performed by the processing module. Optionally, the processing module may be replaced with a processor.

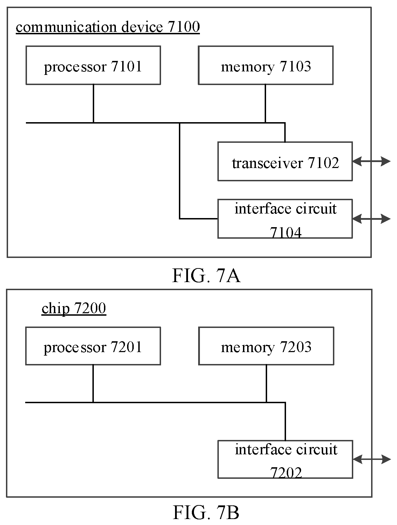

FIG. 7A is a block diagram illustrating a communication device 7100 according to some embodiments of the present disclosure. The communication device 7100 may be a network device (e.g., an access network device, a core network device, a network device, a first network element, etc.), or a terminal (e.g., a terminal, etc.), or a chip, chip system, or processor, etc., supporting the network device to implement any one of the above methods, or a chip, chip system, or processor, etc., supporting the terminal to implement any one of the above methods. The communication device 7100 may be used to implement the methods described in the above method embodiments, and for details reference may be made to the description in the above method embodiments.

As shown in FIG. 7A, the communication device 7100 includes one or more processors 7101. The processor 7101 may be a general-purpose processor or a dedicated processor, such as, a baseband processor and a central processing unit. The baseband processor may be used to process communication protocols and communication data. The central processing unit may be used to control the communication device (e.g., a base station, a baseband chip, a terminal, a terminal chip, a DU, or a CU), execute programs, and process data of the programs. Optionally, the communication device 7100 is used to perform any one of the above methods. Optionally, the one or more processors 7101 are used to invoke instructions to cause the communication device 7100 to perform any one of the above methods.

In some embodiments, the communication device 7100 further includes one or more transceivers 7102. When the communication device 7100 includes one or more transceivers 7102, the transceiver 7102 performs at least one of communication steps such as sending and/or receiving in the above methods (for example, steps such as S2102, S2104 and/or S2106, which is not limited herein), and the processor 7101 performs at least one of other steps (for example, steps such as S2101, S2103, S2105 and/or S2107, which is not limited herein). In embodiments, the transceiver may include a receiver and/or a transmitter, and the receiver and the transmitter may be separate or integrated together. Optionally, terms such as transceiver, transceiver unit, transceiver machine, transceiver circuit, interface circuit, interface may be replaced with each other, terms such as transmitter, transmitting unit, transmitter machine, transmitting circuit may be replaced with each other, and terms such as receiver, receiving unit, receiver machine, receiving circuit may be replaced with each other.

In some embodiments, the communication device 7100 further includes one or more memories 7103 for storing data. Optionally, all or part of the memories 7103 may also be located outside the communication device 7100. In some embodiments, the communication device 7100 may include one or more interface circuits 7104. Optionally, the interface circuit 7104 is connected to the memory 7103, and the interface circuit 7104 may be used to receive data from the memory 7103 or other devices, and may be used to send the data to the memory 7103 or other devices. For example, the interface circuit 7104 may read the data stored in the memory 7103 and send the data to the processor 7101.

The communication device 7100 in the description of the above embodiments may be a network device or a terminal, but the scope of the communication device 7100 described in the disclosure is not limited thereto, and the structure of the communication device 7100 may not be limited by FIG. 7A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 7B is a block diagram illustrating a chip 7200 according to some embodiments of the present disclosure. For the case where the communication device 7100 may be a chip or a chip system, reference may be made to the block diagram of the chip 7200 shown in FIG. 7B, which is not limited herein.

The chip 7200 includes one or more processors 7201. The chip 7200 is configured to perform any one of the above methods.

In some embodiments, the chip 7200 further includes one or more interface circuits 7202. Optionally, terms such as interface circuit, interface, transceiver pin may be replaced with each other. In some embodiments, the chip 7200 further includes one or more memories 7203 for storing data. Optionally, all or part of the memories 7203 may be located outside the chip 7200. Optionally, the interface circuit 7202 is connected to the memory 7203, and the interface circuit 7202 may be used to receive data from the memory 7203 or other devices, and the interface circuit 7202 may be used to send the data to the memory 7203 or other devices. For example, the interface circuit 7202 may read the data stored in the memory 7203 and send the data to the processor 7201.

**In** some embodiments, the interface circuit 7202 performs at least one of communication steps such as sending and/or receiving in the above methods (for example, steps such as S2101 and/or S2102, which is not limited herein). The interface circuit 7202 performing the communication steps such as sending and/or receiving in the above methods means that, for example, the interface circuit 7202 performs data exchange among the processor 7201, the chip 7200, the memory 7203, or a transceiver. In some embodiments, the processor 7201 performs at least one of other steps (for example, S2103, which is not limited herein).

The modules and/or devices described in various embodiments, such as virtual apparatuses, physical apparatuses, chips, etc., may be arbitrarily combined or separated according to circumstances. Optionally, some or all of the steps may also be performed by a plurality of modules and/or devices in cooperation, which is not limited here.

The present disclosure also provides a storage medium for storing instructions that, when executed on the communication device 7100, cause the communication device 7100 to perform any one of the above methods. Optionally, the storage medium is an electronic storage medium. Optionally, the storage medium is a computer-readable storage medium, which is not limited herein, and may also be other device-readable storage media. Optionally, the storage medium may be a non-transitory storage medium, which is not limited herein, and may also be a transitory storage medium.

The present disclosure also provides a program product that, when performed by the communication device 7100, causes the communication device 7100 to perform any one of the above methods. Optionally, the program product is a computer program product.

The present disclosure also provides a computer program that, when executed on a computer, causes the computer to perform any one of the above methods.

## Claims

1. A method for processing information, performed by a terminal, comprising:
performing a first operation related to a first identifier, wherein the first identifier is configured to identify a location services (LCS) session.

2. The method of claim 1, wherein performing the first operation related to the first identifier comprises one of:
receiving a first message sent by a first network element, wherein the first message comprises the first identifier; or
sending a second message to a first network element, wherein the second message comprises the first identifier.

3. The method of claim 2, further comprising one of:
determining the first identifier of the LCS session based on the first message; or
determining the first identifier of the LCS session based on a historical first message; or
allocating the first identifier for the LCS session.

4. The method of claim 2 or 3, wherein
the first message is configured to transmit a long term evolution (LTE) positioning protocol (LPP) message and/or an LCS message;
and/or
the second message is configured to transmit an LPP message and/or an LCS message.

5. The method of any one of claims 2 to 4, further comprising:
sending a third message to the first network element, wherein the third message comprises the first identifier.

6. The method of claim 5, wherein the third message further comprises at least one of:
a message type for indicating a type of location services user plane (LCS-UP) transport;
a payload for indicating a payload of LCS-UP transport; or
a payload type for indicating a payload type of LCS-UP transport.

7. The method of any one of claims 2 to 4, further comprising:
receiving a fourth message sent by the first network element, wherein the fourth message comprises the first identifier.

8. The method of claim 7, wherein the fourth message further comprises at least one of:
a message type for indicating a type of LCS-UP transport;
a payload for indicating a payload of LCS-UP transport; or
a payload type for indicating a payload type of LCS-UP transport.

9. The method of claim 7 or 8, further comprising at least one of:
associating the fourth message with information related to the LCS session indicated by the first identifier; or
performing, based on the fourth message, a second operation related to the LCS session.

10. The method of any one of claims 2 to 9, wherein the first network element is one of:
a location management function (LMF); or
a sensing function (SF).

11. A method for processing information, performed by a first network element, comprising:
performing a first operation related to a first identifier, wherein the first identifier is configured to identify a location services (LCS) session.

12. The method of claim 11, wherein performing the first operation related to the first identifier comprises one of:
sending a first message to a terminal, wherein the first message comprises the first identifier; or
receiving a second message sent by a terminal, wherein the second message comprises the first identifier.

13. The method of claim 12, further comprising one of:
determining the first identifier of the LCS session based on the second message; or
determining the first identifier of the LCS session based on a historical second message; or
allocating the first identifier for the LCS session.

14. The method of claim 12 or 13, wherein
the first message is configured to transmit a long term evolution (LTE) positioning protocol (LPP) message and/or an LCS message;
and/or
the second message is configured to transmit an LPP message and/or an LCS message.

15. The method of any one of claims 12 to 14, further comprising:
receiving a third message sent by the terminal, wherein the third message comprises the first identifier.

16. The method of claim 15, wherein the third message further comprises at least one of:
a message type for indicating a type of location services user plane (LCS-UP) transport;
a payload for indicating a payload of LCS-UP transport; or
a payload type for indicating a payload type of LCS-UP transport.

17. The method of claim 15 or 16, further comprising at least one of:
associating the third message with information related to the LCS session indicated by the first identifier; or
performing, based on the third message, a third operation related to the LCS session.

18. The method of any one of claims 12 to 14, further comprising:
sending a fourth message to the terminal, wherein the fourth message comprises the first identifier.

19. The method of claim 18, wherein the fourth message further comprises at least one of:
a message type for indicating a type of LCS-UP transport;
a payload for indicating a payload of LCS-UP transport; or
a payload type for indicating a payload type of LCS-UP transport.

20. The method of any one of claims 11 to 19, wherein the first network element is one of:
a location management function (LMF); or
a sensing function (SF).

21. A terminal, comprising:
a first processing module, configured to perform a first operation related to a first identifier, wherein the first identifier is configured to identify a location services (LCS) session.

22. A first network element, comprising:
a second processing module, configured to perform a first operation related to a first identifier, wherein the first identifier is configured to identify a location services (LCS) session.

23. A terminal, comprising:
one or more processors,
wherein the terminal is configured to perform the method for processing information of any one of claims 1 to 10.

24. A first network element, comprising:
one or more processors,
wherein the first network element is configured to perform the method for processing information of any one of claims 11 to 20.

25. A communication system, comprising: a terminal and a first network element, wherein the terminal is configured to implement the method for processing information of any one of claims 1 to 10, and the first network element is configured to implement the method for processing information of any one of claims 11 to 20.

26. A storage medium for storing instructions that, when executed on a communication device, cause the communication device to perform the method for processing information of any one of claims 1 to 10 or claims 11 to 20.
